# EUROPEAN PATENT APPLICATION

(11) **EP 1 205 279 A1**
(43) Date of publication of application: **15.05.2002**
(21) Application number: 00830737.3
(22) Date of filing: 08.11.2000
(51) Int. Cl.: B23Q 39/04, B23P 23/02, B23Q 1/00

(54) **Transfer type machine tool**

(71) Applicant: IEMCA Giuliani Macchine Italia S.p.A., 48018 Faenza (Ravenna) (IT)
(72) Inventor: Dellamore, Edo, 40050 Monte San Pietro (Bologna) (IT)
(74) Representative: Lanzoni, Luciano

(57) **Abstract**

A machine tool (1) of the transfer type comprises a rotary unit (4) that turns about a first axis (5) and whose rotational motion forms a machining path (8), a plurality of gripping elements (6) mounted at the edge of the rotary unit (4) and designed to carry at least one workpiece (7) along the machining path (8). Drive means (10) are connected to gripping elements (6) to make them rotate about a second axis (11) that is substantially parallel to the first axis (5). The drive means (10) may consist of a plurality of motors (18) mounted in a fixed position at the machining stations (9) or a plurality of motors (18) each mounted on the rotary unit (4) close to a corresponding gripping element (6).

## Description

The present invention has for an object a machine tool of the transfer type.

In some machine tools of the transfer type known to prior art, the workpieces to be subjected to different machine processes are carried in succession to a plurality of machining stations by a rotary table. Each workpiece is secured by a gripping element mounted on the rotary table and is machined by at least one tool at each station.

Usually, the gripping elements consist of clamps mounted at the edge of the rotary table.

There are preferably as many gripping elements as there are machining stations, so that all the workpieces can be machined simultaneously.

The first machining station is a loading station where the workpiece is gripped by the clamp.

After being machined, the workpiece is conveyed to an unloading station where the clamp releases it, allowing it to be conveyed to subsequent production units.

For machine processes where the relative position between the workpiece and the tool has to be changed, the tool is normally mounted on a tool holding unit that moves in three directions at right angles to each other.

The tool holding unit is designed to orientate the tool according to the type of machining it has to perform and according to the part of the workpiece to be machined.

These known machines have several disadvantages.

The disadvantages are mainly linked to the difficulty of moving and correctly positioning the tools relative to the workpiece.

Even where the tool holding unit is movable, the combination of different movements along the three orthogonal axes required to correctly position the tool for certain machining processes is extremely complex. This is because the tool has to change direction a large number of times, which considerably prolongs machine times and often leads to imprecise machining.

Moreover, a considerable amount of working space is also required to be able to move the tool holding unit along the three orthogonal axes.

Another disadvantage is the fact that turning processes are not possible. This is because the clamps that hold the workpieces are rigidly connected to the rotary table and do not allow the workpiece to be rotated about its longitudinal axis.

In this situation, the technical target which the present invention aims to achieve is to overcome the above mentioned disadvantages through a transfer type machine tool of new design.

The present invention therefore has for its main object to provide a machine tool of the transfer type capable of positioning and orientating the tool relative to the workpiece in a simple and accurate manner.

In particular, the object of the invention is to provide a machine tool of the transfer type that enables the workpiece to be turned relative to the tool.

Another object of the invention is to provide a machine tool of the transfer type capable of performing turning processes at any of its machining stations.

The technical target and the objects stated above are substantially achieved by a machine tool of the transfer type as described in the accompanying claims.

The invention will now be described with reference to the accompanying drawings which illustrate preferred embodiments of it without restricting the scope of the inventive concept, and in which:
- Figure 1 is a schematic top view of a machine tool of the transfer type, with some parts cut away in order to better illustrate others;
- Figure 2 is a side detail view of the machine shown in Figure 1, with some parts cut away in order to better illustrate others;
- Figure 3 shows another embodiment of the detail illustrated in Figure 2;
- Figure 4 illustrates a third embodiment of the machine;
- Figure 5 shows the embodiment illustrated in Figure 4 in a second working condition.

With reference to the accompanying drawings, the numeral 1 denotes in its entirety a machine according to the invention.

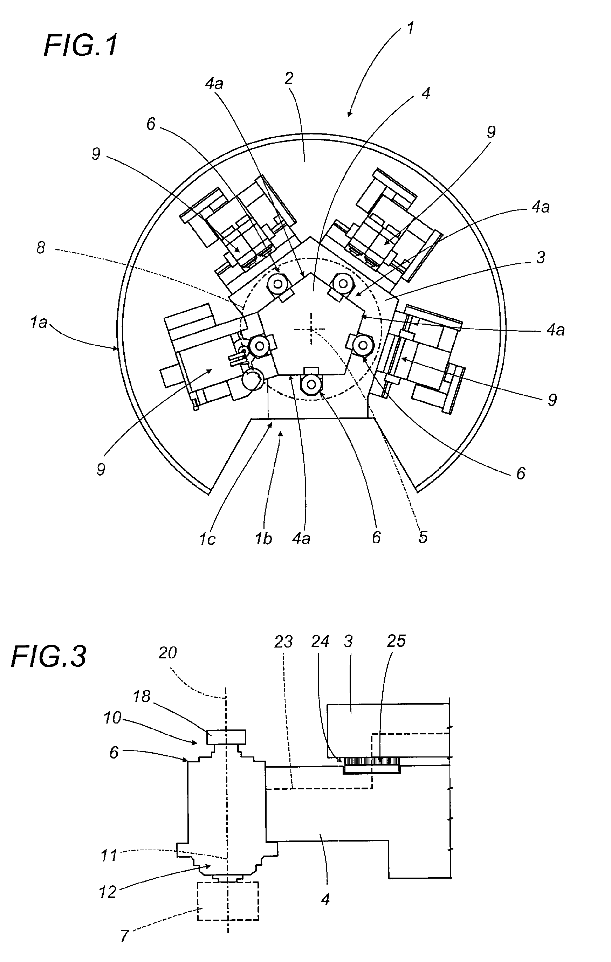

As shown in Figure 1, the machine tool 1 comprises a base 2 that supports a mounting block 3 for a rotary unit 4 in the form of a table that rotates about a first axis 5 that is substantially vertical and perpendicular to the base 2.

Advantageously, the rotary unit 4 is substantially pentagonal in shape and has a plurality of gripping elements 6 mounted at its edge.

Looking in more detail, in the preferred embodiment illustrated in Figure 1, each gripping element 6 is rotatably mounted on a lateral surface 4a of the rotary unit 4.

Each gripping element 6 is designed to carry at least one workpiece 7 along a machining path 8 formed by the rotary unit 4 as it rotates about the first axis 5.

A plurality of machining stations 9 designed to perform different operations on the workpiece 7 are located along the machining path 8.

The machine 1 is peripherally surrounded by a protective screen 1a having a substantially circular base, one of whose sectors 1b forms a compartment 1c providing access to the machine 1 itself.

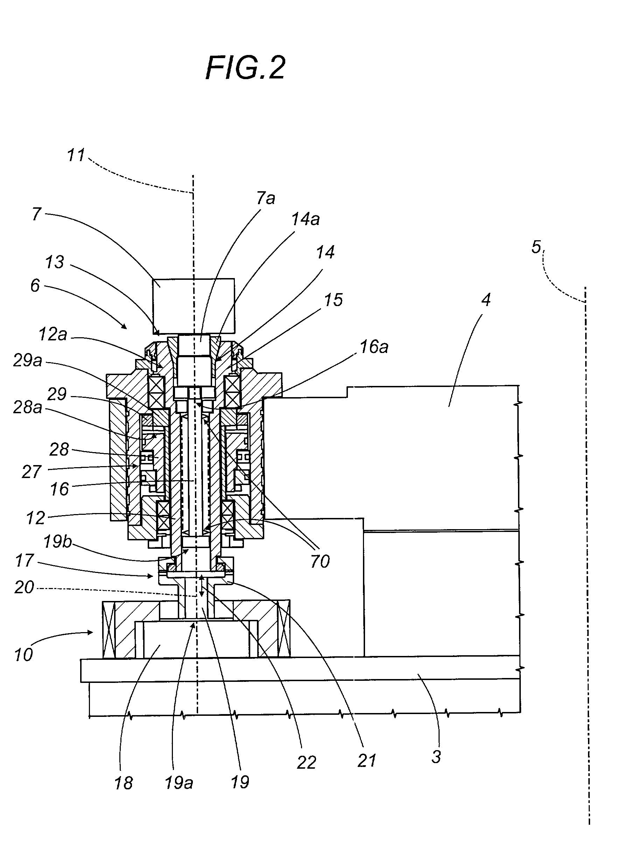

As shown in Figure 2, the gripping elements 6 are connected to drive means 10 which turn them about a second axis 11 in such a way as to orientate the workpiece 7 by positioning it according to the operations to be performed at each of the stations 9.

Each gripping element 6 comprises a spindle 12 having an axis of rotation corresponding to the second axis 11 and being substantially parallel to the first axis 5.

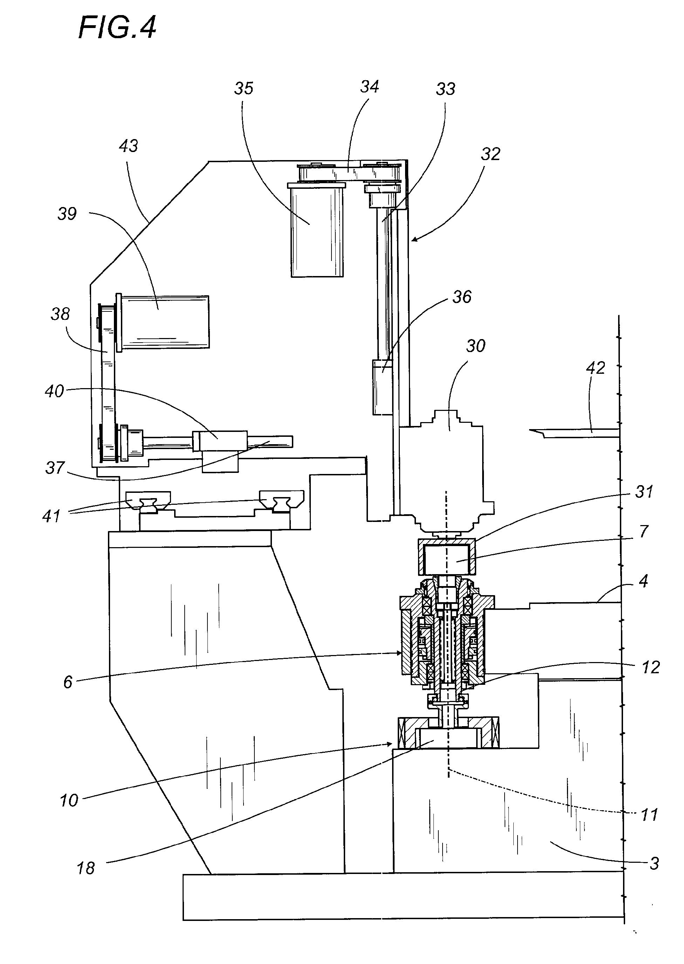

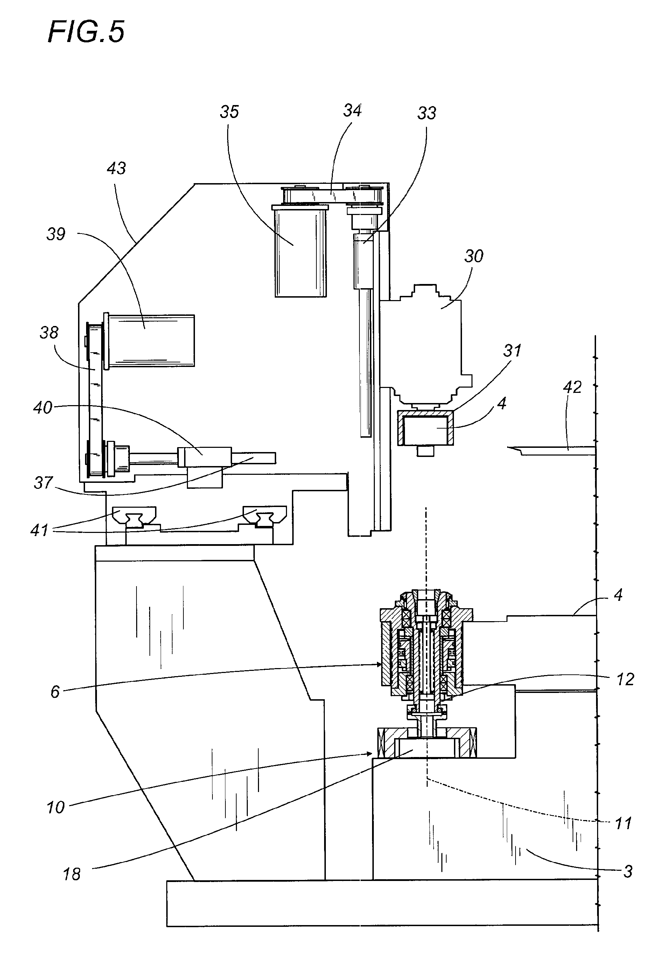

At one end 12a of each spindle 12 which, in working conditions, faces a corresponding machining station 9, there is an engagement element 13 that can be switched from a working condition where it engages the workpiece 7 (see Figures 2 and 4) and an idle position where it does not engage the workpiece 7 (see Figure 5).

Looking in more detail, the engagement element 13 comprises a sleeve 14 designed to hold inside it at least a portion 7a of the workpiece 7. The sleeve 14 has a flared section 14a that slides along a guide 15 formed in the spindle 12.

The flared section 14a slides lengthways along the guide 15 in a direction corresponding to the second axis 11 so as to alternately engage and disengage the portion 7a of the workpiece 7.

The spindle 12 further comprises a shaft 16 extending along the second axis 11 and having a first end 16a rigidly connected to the engagement element 13, and a second end 16b located opposite the first end 16a and connected to a clutch element 17.

Preferably, the clutch element 17 is substantially discoidal and extends transversally to the second axis 11.

The drive means 10 comprise at least one motor 18 mounted close to one of the machining stations 9. Advantageously, the motor 18 is mounted on the mounting block 3 (as illustrated in Figure 2).

The drive means 10 further comprise a shaft 19 that turns about a third axis 20 parallel to the first axis 5 and having a first end 19a that is operatively connected to the motor 18, and a second end 19b located opposite the first end 19a and connected to the clutch element 17 so as to drive the spindle 12.

Looking in more detail, the second end 19b of the shaft 19 has a guide 21 formed in it and being substantially cylindrical in shape to match the shape of the clutch element 17. The guide 21 works in conjunction with the clutch element 17, moving in a direction 22 substantially parallel to the axis 20, between an idle configuration where the clutch element 17 is not inserted in the guide 21, and a working configuration where the clutch element 17 is inserted in the guide 21 and the transmission shaft 16 is coaxial with the shaft 19. In a second embodiment illustrated in Figure 3, the drive means 10 consist of a plurality of motors 18, each mounted on the rotary unit 4.

In particular, each motor 18 is connected to a gripping element 6 and operates on the corresponding spindle 12 in order to drive the spindle 12 itself.

In this embodiment, each motor 18 has a shaft 19, not illustrated in Figure 3, which connects the motor 18 itself directly to the engagement element 13.

Also, the motors 18, which are preferably electrical, are powered by a power supply line 23 which extends into the block 3 and into the rotary unit 4.

In particular, the power supply line 23 comprises a rotary contact 24 that operates between the upright 3 and the rotary unit 4 (as shown in Figure 3). Advantageously, the rotary contact 24 consists of a set of brushes 25 mounted on the block 3 and an annular contact 26 mounted on the rotary unit 4 and connected to the brushes 25 in such a way as to slide on them during the rotation of the rotary unit 4.

With reference to Figure 2, in both the embodiments described above, each gripping element 6 further comprises means 27 for clamping the spindle 12 to keep the workpiece 7 in an angular position predetermined by the motor which drives the spindle 12 itself.

This angular position varies according to the required orientation of the workpiece 7 at each machining station 9, and is controlled by a logic control unit which is not illustrated and which is connected to the motor 18 and to the clamping means 27.

As illustrated in more detail in Figure 2, the clamping means 27 comprise a tubular element 28 mounted in such a way that it can slide lengthways on the spindle 12. The element 28 is driven by appropriate hydraulic means, which are of conventional type and therefore not described in further detail or illustrated in the accompanying drawings, in a direction indicated by the arrow Z, parallel to the second axis 11.

The element 28 is equipped with a toothed flange 28a that acts in conjunction with a first annular rack 29, which is coaxial with the spindle 12 and connected to the rotary unit 4, and with a second rack 29a, which is also annular in shape and attached to the spindle 12.

As it moves, the flange 28a meshes with the toothing of the first rack 29 and of the second rack 29a, thus locking the spindle 12 to the rotary unit 4 in a predetermined position.

In another embodiment, illustrated in Figures 4 and 5, each gripping element 6 can be positioned by the rotary unit 4 at a point on the machining path 8 where the gripping element 6 itself is coaxial with and faces an auxiliary spindle 30.

Advantageously, the auxiliary spindle 30 is mounted in at least one of the machining stations 9.

The auxiliary spindle 30 acts on the workpiece 7 when the corresponding gripping element 6 is positioned at the above mentioned point on the machining path 8 and the engagement element 13 is in the position where it does not engage the workpiece 7.

The auxiliary spindle 30 comprises an auxiliary engagement element 31 designed to hold the workpiece 7.

The auxiliary engagement element 31 is the same as the engagement element 13 and therefore is not further described or illustrated in more detail in the accompanying drawings.

The auxiliary spindle 30 is driven by means 32 which move the auxiliary spindle 30 itself from a first forward position where it is close to the rotary unit 4 (see Figure 4) and at least one second, rear position, where the auxiliary spindle 30 itself is away from the rotary unit 4 (see Figure 5).

The means 32 consist of a first feed screw 33 extending parallel to the second axis 11 and acting in conjunction with a first belt 34 of a first motor, which is labelled 35.

The screw 33 is inserted in a first cylinder 36 that is rigidly connected to the auxiliary spindle 30 through a rod which is not illustrated in the accompanying drawings. The cylinder 36 is internally threaded to match the threading of the screw 33 in such a way that the auxiliary spindle 30 can move in a direction parallel to the second axis 11 when the screw 33 is turned.

The means 32 for moving the auxiliary spindle 30 further comprise a second feed screw 37 extending transversally to the second axis 11 and acting in conjunction with a second belt 38 of a second motor, which is labelled 39.

The screw 37 is inserted in a second cylinder 40 that is rigidly connected to the auxiliary spindle 30 and is internally threaded to match the threading of the screw 37 in such a way that the auxiliary spindle 30 can move in a direction transversal to the second axis 11 when the screw 37 is turned.

Advantageously, there are also rails 41 on which a mounting unit 43 can slide in a direction transversal to the feed screws 33 and 37, the mounting unit 43 supporting the means 32 that move the auxiliary spindle 30.

Close to the auxiliary spindle 30, there is another tool 42 designed to machine also the portion 7a of the workpiece 7.

This portion is machined when the workpiece 7 is engaged in the auxiliary spindle 30 and the latter is away from the rotary unit 4 in the second working position (Figure 5).

The operation of the machine 1 according to the invention structured as described above is as follows.

The gripping element 6 is conveyed along the machining path 8 to a machining station 9 where the drive means 10 are located.

Under these conditions, the rotary table 4 momentarily stops turning and the clutch element 17 is inserted into the guide 21.

The motor 18 turns the shaft 19 and the guide 21 so as to engage the clutch element 17.

The rotational drive of the motor 18 is then transmitted by the clutch element 17 to the engagement element 13 through the spindle 12. In this way, the workpiece 7 held by the spindle 12 is rotated so as to permit turning operations.

Alternatively, the workpiece 7 can be rotated in order to orientate the workpiece 7 so as to place it in a predetermined angular position.

In this case, the logic control unit controls the movement of the motor 18 to angularly position the workpiece 7 and to activate the clamping means 27 so as to lock the spindle 12 in the angular position reached.

In this way, the workpiece 7 is orientated in the predetermined position so that it can be machined at the machining station 9 where the drive means 10 are located or it can be conveyed by the rotary unit 4 to another machining station 9.

In the second embodiment, illustrated in Figure 3, the motor 18, which is permanently connected to the spindle 12, can drive the workpiece 7 at any time, and the clamping means 27 operate in the same way as described above for the first embodiment.

In this case, the motors 18, which are preferably electrical motors, are powered by the power supply line 23 through the rotary contact 24.

In the embodiment with the auxiliary spindle 30, the workpiece 7 is first engaged by the auxiliary spindle 30 and then released by the gripping element 6.

With reference to Figure 2, to disengage the workpiece 7 from the gripping element 6, the shaft 19 is fed by conventional motor means which are not illustrated, in the direction 22 in such a way as to make the flared section 14a slide in the guide 15, thus releasing the portion 7a of the workpiece 7. As the shaft 16 moves forward to enable the portion 7a of the workpiece 7 to be released, it is opposed by a plurality of springs 70 designed to hold the portion 7a itself to the gripping element 6 during normal machining operations and during movement from one position to another.

The auxiliary spindle 30 holding the workpiece can be moved along the three orthogonal axes by the means 32 in such a way as to carry the workpiece 7 to the tool 42 which also machines the portion 7a of the workpiece 7.

Advantageously, this machining operation may consist in cutting off the workpiece 7 portion 7a which has not been machined because it was held inside spindle 12.

The invention achieves significant advantages.

First of all, the machine tool of the transfer type according to the present invention is able to angularly orientate the workpiece 7 by rotating the spindle 12.

The movements required to position the tools relative to the workpiece 7 are significantly reduced.

Another advantage is that turning operations on the workpiece 7 are also possible. This advantage is made possible by the fact that the workpiece 7 itself can be rotated by means of the gripping element 6.

Another advantage of the second embodiment illustrated in Figure 3, where the motor 18 is mounted on the rotary unit 4, is the possibility of powering the motor 18 as the rotary unit 4 rotates. Indeed, the rotary contact 24 enables each motor 18 to be powered without using cables passing between the mounting block 3 and the rotary unit 4. Such cables would become entangled with each other as the rotary unit 4 rotates.

Yet another advantage is the possibility of performing turning or cutting off operations also on the workpiece 7 portion 7a which is not normally machined since it is engaged in the gripping element 6.

This advantage is possible because the workpiece 7 can be disengaged and held by the auxiliary spindle 30.

The invention described can be subject to modifications and variations without thereby departing from the scope of the inventive concept.

## Claims

1. A machine tool of the transfer type comprising:
- a rotary unit (4) which turns about a first axis (5) and whose rotational motion forms a machining path (8);
- a plurality of gripping elements (6) mounted at the edge of the rotary unit (4) and designed to carry at least one workpiece (7) along the machining path (8); and
- a plurality of machining stations (9) located on the machining path (8);
the machine tool being **characterised in that** the gripping elements (6) are rotatably mounted on the rotary unit (4), and **in that** it further comprises drive means (10) which are connected to the gripping elements (6) and which turn the latter about a second axis (11).

2. The machine tool according to claim 1, **characterised in that** the first axis (5) is substantially parallel to the second axis (11).

3. The machine tool according to claim 1, **characterised in that** each of the gripping elements (6) comprises a spindle (12) having:
- an element (13) for engaging the workpiece (7), located at one end (12a) of the spindle (12) and able to be switched from a working condition where it engages the workpiece (7) and an idle condition where it does not engage the workpiece (7); and
- a transmission shaft (16) extending along the second axis of rotation (11) and having a first end (16a) rigidly connected to the engagement element (13) and a second end (16b) located opposite the first end (16a) and connected to a clutch element (17);
and **characterised** also **in that** the drive means (10) comprise:
- at least one motor (18) mounted close to one of the machining stations (9);
- a shaft (19) that turns about a third axis (20) parallel to the first axis (5) and having a first end (19a) that is operatively connected to the motor (18), and a second end (19b) located opposite the first end (19a) and connected to the clutch element (17) to drive the spindle (12) with the motor (18).

4. The machine tool according to claim 3, **characterised in that** the second end (19b) of the shaft (19) has a guide (21) formed in it and being shaped to match the shape of the clutch element (17), the guide (21) working in conjunction with the clutch element (17) in a direction (22) parallel to the axis (20), between an idle configuration where the clutch element (17) is not inserted in the guide (21), and a working configuration where the clutch element (17) is inserted in the guide (21) and the transmission shaft (16) is coaxial with the shaft (19).

5. The machine tool according to claim 1, **characterised in that** each of the gripping elements (6) comprises a spindle (12) having an element (13) for engaging the workpiece (7) located at one end (12a) of the spindle (12) and able to be switched from a working condition where it engages the workpiece (7) and an idle condition where it does not engage the workpiece (7);
and **characterised** also **in that** the drive means (10) comprise a plurality of motors (18) each mounted on the rotary unit (4) close to a corresponding gripping element (6), and each of the motors (18) being operatively connected to the engagement element (13) of a corresponding spindle (12) in order to drive the spindle (12) itself.

6. The machine tool according to claim 5, **characterised in that** the motors (18) are electrical and **in that** it further comprises :
- a mounting block (3) for the rotary unit (4);
- a power supply line (23) for the motors (18) which extends into the block (3) and into the rotary unit (4).

7. The machine tool according to the preceding claim, **characterised in that** the power supply line (23) comprises a rotary contact (24) that operates between the block (3) and the rotary unit (4).

8. The machine tool according to any of the foregoing claims from 3 to 7, **characterised in that** each of the gripping elements (6) further comprises means (27) for clamping the spindle (12) to keep the workpiece (7) in an angular position predetermined by the motor (18) which drives the spindle (12).

9. The machine tool according to any of the foregoing claims from 3 to 8, **characterised in that** at least one of the machining stations (9) comprises an auxiliary spindle (30) facing the rotary unit (4); each of the gripping elements (6) being able to be positioned by the rotary unit (4) at a point on the machining path (8) where the gripping element (6) is coaxial with and faces the auxiliary spindle (30); the auxiliary spindle (30) acting on the workpiece (7) when the corresponding gripping element (6) is at the aforesaid point on the machining path (8) and the engagement element (13) is in the idle condition.

10. The machine according to the preceding claim, **characterised in that** it further comprises:
- means (32) for moving the auxiliary spindle (30) itself from a first forward position where it is close to the rotary unit (4) and at least one second, rear position, where the auxiliary spindle (30) is away from the rotary unit (4);
- at least one tool (42) that machines the workpiece (7) held by the auxiliary spindle (30) when the auxiliary spindle (30) is in the second position.
